# EUROPÄISCHE PATENTSCHRIFT

(11) **EP 1 534 556 B1**
(45) Veröffentlichungstag und Bekanntmachung des Hinweises auf die Patenterteilung: **29.10.2008**
(21) Anmeldenummer: 03764875.5
(22) Anmeldetag: 27.03.2003
(51) Int. Cl.: B60N 2/44, B64D 11/06, A47C 4/54

(54) **ADAPTIVES PNEUMATISCHES SITZ- UND LEHNKISSEN FÜR FAHR- UND FLUGZEUGE**
ADAPTIVE PNEUMATIC SITTING AND RECLINING CUSHION FOR VEHICLES AND AIRCRAFT
COUSSIN PNEUMATIQUE ADAPTATIF D'ASSISE ET DE DOSSIER POUR VEHICULES AUTOMOBILES ET AVIONS

(30) Priorität: 18.07.2002 DE 10232627
(43) Veröffentlichungstag der Anmeldung: 01.06.2005
(73) Patentinhaber: Prospective Concepts AG, 8152 Glattbrugg (CH)
(72) Erfinder: KEREKES, Laszlo, CH-8037 Zürich (CH); MOOR, Tina, CH-2072 St. Blaise (CH)
(74) Vertreter: Salgo, Reinhold Caspar
(86) Internationale Anmeldenummer: PCT/CH2003/000200
(87) Internationale Veröffentlichungsnummer: WO 2004/009400

(56) Entgegenhaltungen:
- EP-A- 1 080 984
- DE-A- 19 707 621
- FR-A- 2 727 066
- US-A- 4 433 708
- US-A- 4 965 899
- US-A- 5 135 282
- US-A- 5 354 117

## Beschreibung

Die vorliegende Erfindung betrifft ein adaptives pneumatisches Sitz- und Lehnkissen für Fahr- und Flugzeuge nach dem Oberbegriff des Patentanspruches 1. Pneumatische Sitz- und Lehnkissen sind an sich bekannt. Sie bestehen in der Regel aus einer Vielzahl von nebeneinandergereihten Luftschläuchen, welche über ein gemeinsames Ventil be- und entlüftet werden können und gleichen damit in Aufbau und Form der bekannten Luftmatratze. Eine gewisse Adaptionsmöglichkeit besteht darin, einzelne Schläuche auf unterschiedliche Luftdrucke zu bringen, wodurch Form und Weichheit in beschränktem Umfang variiert werden können. Für den praktischen Einsatz werden solche Kissen noch mit einem textilen Überzug versehen. Die Grundstruktur der Schläuche jedoch bleibt sichtbar - und für ein Kissen wesentlich - auch spürbar.

Die Aufgabe der vorliegenden Erfindung ist die Schaffung eines in weiten Bereichen adaptiven Sitz- und Lehnkissens, welches hohen Ansprüchen im Bereiche des Sitzkomforts zu genügen vermag, gegenüber konventionellen Schaumstoffkissen eine spürbare Gewichtsersparnis bringen kann, und bei dessen Herstellung einfach auf bestehende Sitzschalenkonstruktionen Rücksicht genommen werden kann.

Die Lösung der gestellten Aufgabe ist wiedergegeben im Patentanspruch 1 hinsichtlich der wesentlichen Merkmale, in den weiteren Patentansprüchen hinsichtlich weiterer vorteilhafter Merkmale. Anhand der beigefügten Zeichnung wird die Erfindung näher erläutert.

Es zeigen
- Fig. 1: ein erstes Ausführungsbeispiel in Perspektive,
- Fig. 2: das erste Ausführungsbeispiel in einem Querschnitt AA,
- Fig. 3: ein zweites Ausführungsbeispiel in Perspektive,
- Fig. 4: das zweite Ausführungsbeispiel in einem Querschnitt AA,
- Fig. 5: das zweite Ausführungsbeispiel in einem Längsschnitt BB,

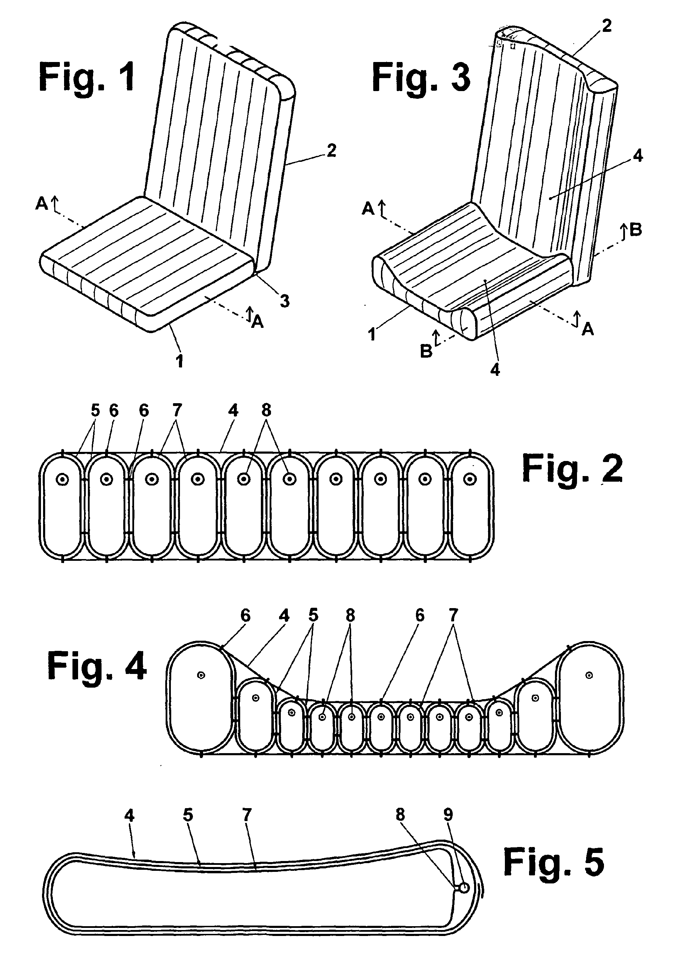

Fig. 1 ist eine perspektivische Darstellung eines ersten Ausführungsbeispieles eines erfindungsgemässen Sitz- und Lehnkissens, hier in einer einfachen Ausführung, beispielsweise für ein Massenverkehrsmittel. Es ist gegliedert in ein Sitzkissen 1 und ein Lehnkissen 2. Diese sind einzeln ausgeführt und beispielsweise durch eine textile Verbindung 3 zusammengefügt. Ein allfälliger Sitzüberzug ist entfernt. Nicht dargestellt ist ferner die eigentliche Sitzstruktur, da Stand der Technik und nicht Erfindungsgegenstand.

Fig. 2 ist die Darstellung eines Schnittes AA durch das Sitzkissen 1 und zeigt in schematischer Weise dessen inneren Aufbau: Es weist eine Hülle 4 auf aus einem textilen und vorzugsweise dehnungsarmen Material. In diese Hülle 4 ist eine Vielzahl von ebenfalls dehnungsarmen rohrartigen textilen Taschen 5 eingelegt, welche entlang von Nähten 6 einerseits mit der Hülle 4 anderseits miteinander verbunden sind. Jede Tasche 5 enthält eine Blase 7 aus elastischem Kunststoff mit einem Ventil 8 zum Be- und Entlüften. Werden die Blasen 7 mit Druckluft beaufschlagt, so hat jede - wegen des Tensorcharakters des Druckes - das Bestreben, im Querschnitt Kreisform anzunehmen. Die Formgebung der Taschen 5 und deren Verbindung mit der Hülle 4 verhindert dies jedoch. Durch diese Einschränkung wird jedoch die Hülle 4 gespannt. Dadurch wird die eigentliche Sitzfläche nicht durch die Summe der Taschen 5, sondern durch die Oberseite der gespannten Hülle 4 gebildet, was eine wesentliche Änderung des Sitzgefühls und -Komforts ergibt. Da jede Blase 7 einzeln mit Druckluft beaufschlagt wird, sind für einzelne dieser Blasen unterschiedliche Drucke vorsehbar. Dadurch kann der Sitzkomfort individuellen Bedürfnissen angepasst werden.

Die in Fig. 2 dargestellte Bauweise ist prinzipiell für das Sitzkissen und das Lehnkissen 2 dieselbe. Selbstverständlich können einzelne Parameter, wie Anzahl der Taschen 5 und deren Breite und Bauhöhe und die Luftdrucke unterschiedlich gewählt werden.
Fig. 3 stellt ein zweites Ausführungsbeispiel des erfindungsgemässen Sitz- und Lehnkissens 1, 2 dar mit stärker der Anatomie angepassten Formen. Die grundsätzliche Gliederung des Aufbaus in Hülle 4, Taschen 5 und Blasen 7 wird jedoch beibehalten, wie aus Fig. 4 ersichtlich ist. Die Querdimensionen der Taschen 5 und der Blasen 7 sind jedoch so ausgeführt, dass die beispielsweise zwei Taschen 5, die je gegen den bzw. am Rand des Sitzkissens 1 liegen, grösser gewählt werden, als diejenigen, die zusammen die Sitzfläche bilden.
In Fig. 2 und 3 sind die Taschen 5 im Sitzkissen 1 parallel zur Richtung des Sitzes einerseits, im Lehnkissen 2 in der oben-unten-Richtung anderseits angeordnet, worauf sich auch die Fig. 4 und 5 beziehen. Selbstverständlich ist es ohne weiteres möglich, die Taschen sowohl in Sitz- als auch Lehnkissen 1, 2 quer zu den genannten Richtungen anzuordnen, mit der Konsequenz für Fig. 5, dass die Konturierung symmetrisch ist.
In Fig. 4, einem Schnitt AA durch Fig. 3, ist das zweite Ausführungsbeispiel dargestellt.
Fig. 5 zeigt einen Längsschnitt BB durch Fig. 3 beispielsweise durch die eine aussenliegende Tasche 5. Im vorliegenden Ausführungsbeispiel ist diese so konturiert ausgeführt, dass ihre Höhe von vorne gegen die Mitte hin abnimmt und gegen hinten wieder zunimmt. Selbstverständlich sind andere Gestaltungen ebenfalls im Erfindungsgedanken eingeschlossen. Es kann also allgemein davon gesprochen werden, dass die Querdimensionen der Taschen 5 mit deren Längsdimensionen variieren. So können einzelne Taschen 5 von vorne nach hinten - oder umgekehrt - konisch zulaufen oder von konstanter Form und Grössen des Querschnittes gestaltet sein. Da die Taschen 5 aus textilem Werkstoff gefertigt sind, sind solche Formgebungen Stand der Technik. Dies gilt in gleichem Masse für die ebenfalls formdefinierende Hülle 4. Diese kann beispielsweise hinten am Sitzkissen offen sein, so dass die Verbindungen der Ventile 8 mit Luftleitungen 9 erst bei fertig konfektioniertem Sitzkissen erfolgen können.

Das bis anhin für das Sitzkissen ausgeführte gilt selbstverständlich in gleicher Weise für das Lehnkissen 2 für den grundsätzlichen Aufbau. Die Dimensionen der Taschen 5, deren Anzahl und die anzuwendenden Luftdrucke können jeweils leicht den zu erfüllenden Anforderungen angepasst werden, so dass ein optimaler Sitzkomfort erreicht werden kann. Da dieser abhängig ist von den Körpermassen der sitzenden Person, kann jede in einer Tasche 5 eingelegte Blase 7 individuell durch Luftdruck beaufschlagt werden. Damit kann der anatomisch optimierte Grundaufbau noch persönlich optimiert werden.

Entscheidend und erfindungsgemäss ist der Umstand, dass Form und Verhalten von Sitz- und Lehnkissen 1, 2 primär durch die gespannte Hülle 4 definiert werden, und die Taschen 5 mit Blasen 7 primär die Aufgabe haben, die Hülle zu spannen und zu formen.

Die Befestigung von Sitz- und Lehnkissen 1, 2 in einer gegebenen Sitzstruktur geschieht vorzugsweise durch je zwei oder mehr Haftverschluss-Streifen, die an der Hülle 4 ebenfalls durch Nähen, an der Sitzstruktur durch Kleben befestigt werden können. Andere Arten der Befestigung, wie durch Klemmen, Knöpfen, sind ebenfalls denkbar.

## Patentansprüche

1. Pneumatisches adaptives Sitz- und Lehnkissen (1, 2) für Fahr- und Flugzeuge, das aus einem Sitzkissen (1) und einem Lehnkissen (2) aufgebaut ist, welche verbunden sein können, wobei sowohl Sitz- als auch Lehnkissen (1, 2) folgende gemeinsame Merkmale aufweisen:
- eine Vielzahl von nebeneinander angeordneten rohrartigen Taschen (5) aus wenig dehnbarem textilen Material, von denen jede mit den benachbarten durch Nähte (6) verbunden ist,
- jede Tasche (5) eine Blase (7) aus elastischem Kunststoff mit einem Ventil (8) enthält, welche mit Druckluft beaufschlagt werden kann, **dadurch gekennzeichnet, dass**
die Taschen (5) in ihrer Gesamtheit von einer Hülle (4) aus wenig dehnbarem textilen Material umschlossen und mit der Hülle (4) entlang von weiteren Nähten (6) vernäht sind, dergestalt, dass die Hülle (4) dann, wenn die Blasen (7) mit Druckluft beaufschlagt werden, gespannt wird und dadurch die eigentlichen Sitz- und Lehnflächen bildet.

2. Pneumatisches Sitz- und Lehnkissen nach Patentanspruch 1, **dadurch gekennzeichnet, dass** die Taschen (5) im Sitzkissen (1) parallel zur Richtung des Sitzes, im Lehnkissen (2) in der oben-unten-Richtung angeordnet sind.

3. Pneumatisches Sitz- und Lehnkissen nach Patentanspruch 1, **dadurch gekennzeichnet, dass** die Taschen (5) sowohl in Sitz- und Lehnkissen (1, 2) quer zum Sitz angeordnet sind.

4. Pneumatisches Sitz- und Lehnkissen nach Patentanspruch 2 oder 3, **dadurch gekennzeichnet, dass** alle Taschen (5) im Sitzkissen (1) einerseits und im Lehnkissen (2) anderseits untereinander gleich gross sind.

5. Pneumatisches Sitz- und Lehnkissen nach Patentanspruch 2 oder 3 **dadurch gekennzeichnet, dass** die Taschen (5) in ihrer Querdimension unterschiedlich so gewählt sind, dass ein optimaler Sitzkomfort erreicht werden kann.

6. Pneumatisches Sitz- und Lehnkissen nach Patentanspruch 5, **dadurch gekennzeichnet, dass** jede Tasche (5) einzeln durch Druckluft beaufschlagt werden kann.

7. Pneumatisches Sitz- und Lehnkissen nach Patentanspruch 2 oder 3, **dadurch gekennzeichnet, dass** die Querdimensionen der Taschen (5) mit der Längsdimension variieren.

## Claims

1. Pneumatic adaptive seat and backrest cushion (1, 2) for vehicles and aeroplanes, which is constructed from a seat cushion (1) and a backrest cushion (2) that can be connected together, both seat and recliner cushion (1, 2) having the following features:
- a plurality of tubular pockets (5) arranged next to one another made of weakly expansible textile material, each of which is joined to the neighbouring one by means of seams (6),
- each pocket (5) contains a bladder (7) made of elastic plastic with a valve (8), which can be pressurised with compressed air, **characterized in that**
the pockets (5) are entirely enclosed by a jacket (4) made of weakly expansible textile material and are sewn together with the jacket (4) along additional seams (6), in such a manner that, when the bladders (7) are pressurised with compressed air, the jacket (4) is stretched and thereby forms the actual seating and backrest surfaces.

2. Pneumatic seat and backrest cushion according to Claim 1, **characterized in that,** the pockets (5) in the seat cushion (1) are arranged parallel to the direction of the seat, and those in the backrest cushion (2) in the top-to-bottom direction.

3. Pneumatic seat and backrest cushion according to Claim 1, **characterized in that**, the pockets (5) in both the seat cushion and the backrest cushion (1, 2) are arranged transversely to the seat.

4. Pneumatic seat and backrest cushion according to Claim 2 or 3, **characterized in that,** all pockets (5) in both the seat cushion (1) and the backrest cushion (2) are of equal size to one another.

5. Pneumatic seat and backrest cushion according to Claim 2 or 3, **characterized in that**, the pockets (5) are chosen with different transverse dimensions in such a way that an optimal level of seating comfort can be obtained.

6. Pneumatic seat and backrest cushion according to Claim 5, **characterized in that,** each pocket (5) can be individually pressurised with compressed air.

7. Pneumatic seat and backrest cushion according to Claim 2 or 3, **characterized in that,** the transverse dimensions of the pockets (5) vary with the length dimension.

## Revendications

1. Coussin d'assise et d'appui pneumatique adaptatif (1, 2) pour véhicules et avions, constitué d'un coussin d'assise (1) et d'un coussin d'appui (2) pouvant être reliés entre eux, dans lequel aussi bien le coussin d'assise que le coussin d'appui (1, 2) présentent les caractéristiques suivantes :
- une multitude de poches tubulaires (5) disposées les unes à côté des autres, constituées d'une matière textile peu extensible, parmi lesquelles chacune est reliée aux poches voisines par des coutures (6),
- chacune des poches (5) contient une bulle (7) en plastique élastique avec une soupape (8), pouvant être remplie d'air comprimé, **caractérisé en ce que**
les poches (5) dans leur ensemble sont enfermées dans une enveloppe (4) constituée d'une matière textile peu extensible, et cousues à l'enveloppe (4) le long de coutures supplémentaires (6), de telle manière que l'enveloppe (4) est tendue lorsque les bulles (7) sont remplies d'air comprimé, formant ainsi les surfaces d'assise et d'appui effectives.

2. Coussin pneumatique d'assise et d'appui selon la revendication 1, **caractérisé en ce que** dans le coussin d'assise (1), les poches (5) sont disposées parallèlement au sens du siège, et dans le sens de haut en bas dans le coussin d'appui (2).

3. Coussin pneumatique d'assise et d'appui selon la revendication 1, **caractérisé en ce que** les poches (5) sont disposées transversalement au siège, aussi bien dans le coussin d'assise que dans le coussin d'appui (1, 2).

4. Coussin pneumatique d'assise et d'appui selon l'une des revendications 2 ou 3, **caractérisé en ce que** toutes les poches (5) dans le coussin d'assise (1) d'une part et dans le coussin d'appui (2) d'autre part sont de la même taille.

5. Coussin pneumatique d'assise et d'appui selon l'une des revendications 2 ou 3, **caractérisé en ce que** les poches (5) sont conçues différemment quant à leur dimension transversale, de façon à obtenir un confort d'assise optimal.

6. Coussin pneumatique d'assise et d'appui selon la revendication 5, **caractérisé en ce que** chacune des poches (5) peut être remplie séparément avec de l'air comprimé.

7. Coussin pneumatique d'assise et d'appui selon l'une des revendications 2 ou 3, **caractérisé en ce que** les dimensions transversales des poches (5) varient en fonction de la dimension longitudinale.
